# EUROPÄISCHE PATENTANMELDUNG

(11) **EP 3 400 862 A2**
(43) Veröffentlichungstag der Anmeldung: **14.11.2018**
(21) Anmeldenummer: 18020182.4
(22) Anmeldetag: 30.04.2018
(51) Int. Cl.: A47L 9/28

(54) **VERFAHREN ZUR PROGRAMMIERUNG EINES SERVICEROBOTERS UND DOKUMENTATION DER ERBRACHTEN LEISTUNG**

(30) Priorität: 08.05.2017 DE 102017109880
(71) Anmelder: ADLATUS Robotics GmbH, 89077 Ulm (DE)
(72) Erfinder: Zell, Simon, 89073 Ulm (DE); Hochdorfer, Siegfried, 88471 Untersulmetingen (DE)
(74) Vertreter: Meyer, Thorsten

(57) **Zusammenfassung**

Die Erfindung betrifft eine Verfahrenskette bestehend aus mindestens vier logischen Teilen
- Einmalige Inbetriebnahme des Roboter in einer neuen Umgebung;
- grafische Programmierung des Roboter;
- Deployment;
- Ausführung des Reinigungsprogramms.

## Beschreibung

Die Erfindung betrifft ein Verfahren zur Verbesserung der Autonomie eines Serviceroboters.

Aufgabe der Erfindung ist es eine verbesserte Programmierung eines Serviceroboters zur Verfügung zu stellen.

Diese Aufgabe wird durch ein Verfahren nach den Merkmalen der Ansprüche gelöst.

Die Erfindung ist durch eine Verbesserung der Programmierung und der Dokumentation der geleisteten Arbeit gekennzeichnet.

Vorteile durch das vorgeschlagene Verfahren sind:
Nachweis der erbrachten Reinigungsleistung oder Dokumentation der Planabweichungen fehlt im Stand der Technik (Protokollierung) .
Verfahren zur grafischen Inbetriebnahme und Programmierung eines Reinigungsroboters

Um eine hohe Verfügbarkeit eines Serviceroboters zu gewährleisten sind Verbesserungen im gesamten Prozess erforderlich. Beim Verfahren wie ein Roboter in Betrieb genommen wird muss berücksichtigt werden dass die Umgebungen sehr groß und komplex sein können und die geleistete Arbeit dokumentiert werden kann.

Die gesamte Verfahrenskette erfolgt mittels einer grafischen Benutzerschnittstelle. Die Benutzerschnittstelle kann auf dem Roboter direkt oder auch auf einem externen Rechner ausgeführt werden.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung einer Verfahrenskette zur Inbetriebnahme und Programmierung eines Service-roboters, und
- Fig. 2: eine schematische Darstellung eines Reinigungsreport mit Soll-Ist-Vergleich.

Die in den Figuren gleichen Bezugsziffern bezeichnen gleiche oder gleich wirkende Elemente.

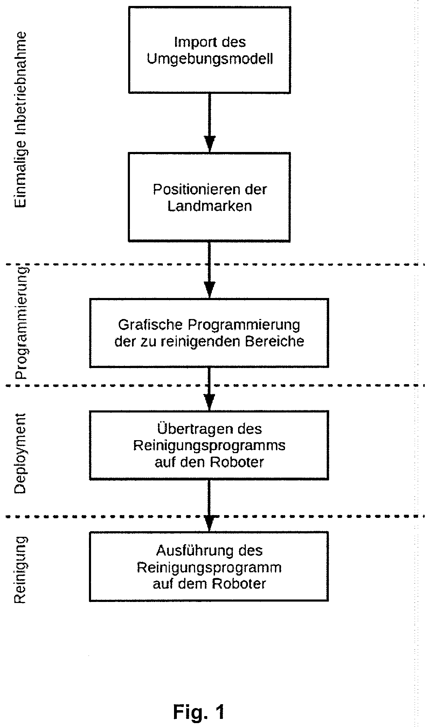

Fig. 1 zeigt eine Verfahrenskette zur Inbetriebnahme und Programmierung eines Serviceroboters. Die Verfahrenskette besteht aus mindestens vier logischen Teilen:
1. Inbetriebnahme des Roboter in einer neuen Umgebung
2. grafische Programmierung des Roboter
3. Deployment
4. Ausführung des Reinigungsprogramms

Die Inbetriebnahme des Roboters ist für jede neue Umgebung nur einmalig erforderlich. Im Gegensatz dazu werden die grafische Programmierung und das Deployment immer dann wenn sich die Aufgabe des Roboters ändert durchgeführt. Der eigentliche Start des Reinigungsprogramm erfolgt typischerweise täglich.

Das einlernen von neuen Umgebungen durch den Roboter ist zwar grundsätzlich möglich, jedoch ist dies in komplexen dynamischen oder sehr großen Umgebungen sehr fehleranfällig. Um eine große Robustheit gegen Fehler zu erzielen wird bei dem hier beschriebenen Verfahren bei der Inbetriebnahme des Roboters in einer neuen Umgebung ein Umgebungsmodell z.B. einer Zeichnung des Grundriss des Arbeitsbereichs (z.B. vom Architekten) in elektronischer Form (z.B. dxf oder dwg Dateiformat) importiert. Dieses Umgebungsmodell ist eine wesentliche Information für beide auf dem Roboter implementierten Arten der Roboterlokalisierung. Bei der ersten Methode werden Landmarken als externe Referenzierung verwendet. Die Positionskorrektur erfolgt über eine Fusion der Radencoder des Roboters mit Winkel und Distanzmessungen eines Distanzgebenden Sensors zu den detektierten Landmarken. Bei dieser Art der Lokalisierung müssen die Positionen der in der Umgebung angebrachten Landmarken in das Umgebungsmodell eingezeichnet werden.

Bei der zweiten Methode wird die Importierte Hindernisstruktur aus dem Gebäudeplan als externe Referenzierung verwendet. Hierbei werden ebenfalls die Radencoder Werte mit Messungen eines oder mehrere Distanzgebenden Sensoren fusioniert. Im Gegensatz zur Landmarkenbasierten Lokalisierung erfolgt die Referenzierung über mehrere Winkel und Distanzmessungen zur aus der Umgebungskarte bekannten Hindernisstruktur.

Die Programmierung des Roboters erfolgt in einem Softwareprogramm (Command & Control Software) mit einer grafischen Benutzerschnittstelle welche auf einem separaten Computer ausgeführt wird. Eine rein grafische Programmierung des Roboters ermöglicht es auch Fachfremden Anwendern den Roboter intuitiv zu programmieren und dies auch ohne dass ein direkter Zugriff auf den Roboter erforderlich ist. Die Programmierung des Roboters auf eigenen separaten Computer ermöglicht es auch den Roboter zu programmieren während der Roboter eine Aufgabe ausführt oder auch wenn der Roboter und der Programmierer des Roboters an getrennten Orten sind. Zur Programmierung zeichnet der Benutzer den gewünschten Pfad des Roboters in das importierte Umgebungsmodell ein und annotiert bei welchen Teilstrecken die Reinigungseinheit aktiv sein soll. Die grafische Benutzerschnittstelle unterstützt den Benutzer durch Vorlagen von häufig verwendeten Bewegungsmuster wie z.B. Mäanderförmiges abfahren einer Freifläche, spiralförmiges abdecken von Flächen oder abfahren eines beliebigen Polygonzugs.

Die erstellten Reinigungspläne und die importierte Umgebung sowie ggf. die Landmarken Daten können dann direkt aus der grafischen Benutzerschnittstelle über ein drahtloses oder drahtgebundenes Netzwerk auf den Roboter übertragen werden. Die Kommunikation zwischen der Grafischen Benutzerschnittstelle und dem Roboter erfolgt verschlüsselt. Eine mögliche Ausprägung ist die Übertragung der Daten mittels SFTP (SSH File Transfer Protocol). Die für die Authentifizierung erforderlichen Daten wie Benutzername und Passwort gibt der Benutzer direkt in der Grafischen Benutzerschnittstelle ein. Die Zugangsdaten auf dem Roboter können in der Benutzerschnittstelle auf dem Touch-Display verwaltet werden. Durch die Möglichkeit die Daten über ein Netzwerk auf den Roboter zu übertragen muss der Benutzer nicht vor Ort sein um den Roboter zu programmieren und im Falle dass ein Roboter ausgetauscht wird kann das Programm mit allen für die Inbetriebnahme relevanten Daten auch auf einen neuen Roboter übertragen werden und die Inbetriebnahme des neuen Roboters entfällt.

Zum Start einer Reinigungsaufgabe wählt der Benutzer am Roboter den gewünschten Reinigungsplan aus und startet die Reinigungsaufgabe manuell oder gibt den Startzeitpunkt für einen zeitgesteuerten Start des Roboters an. Für den Zeitgesteuerten Start gibt der Benutzer die Startzeit und das Datum ein an welchem das Reinigungsprogramm ausgeführt werden soll. Für jedes Programm können unterschiedliche Startzeitpunkte angegeben werden. Um Konflikte der Startzeitpunkte zu vermeiden wird überprüft ob zwischen dem Start eines Programms und dem Start eines nachfolgenden Programms ausreichend Zeit verbleibt. Hierzu wird die Ausführungszeit des Programms geschätzt und ein zusätzlicher zeitlicher Puffer hinzugefügt. Die Ausführungszeit wird geschätzt indem die zu fahrende Strecke durch eine empirisch ermittelte Durchschnittsgeschwindigkeit geteilt wird. Der zeitliche Puffer ist ein prozentualer Anteil der geschätzten Ausführungszeit.

Ein weiterer Aspekt der Erfindung ist eine automatisierte Dokumentation für einen Roboter, insbesondere einen Reinigungsroboter, wobei eine Erfassungs- und Dokumentationsvorrichtung zur automatischen Protokollierung und Erstellung elektronischer Dokumente (z.b. im PDF-Format) vorhanden ist, welche typischerweise nach jeder Reinigungsaufgabe bzw. in definierten Zeitintervallen (z.B. pro Reinigungstag oder - woche) automatisiert von der Steuerungseinheit erstellt und vorzugweise nicht nur im eigenen Speicher zur Einsicht oder zum Abruf gespeichert wird, sondern über eine entsprechende Kommunikationsvorrichtung (WLAN, Bluetooth, Mobilfunk wie GSM/LTE) am Roboter zur Infrastruktur im Objekt oder an eine entfernte Stelle (z.B. per E-Mail, Ablage in einer Cloud oder auch per Push-Nachricht direkt an eine App auf ein mobiles Endgerät) übermittelt wird, wobei ein wesentliches Merkmal die Dokumentation von Planabweichungen ist. Die Dokumentation besteht aus einem Bericht und optional mit einer Grafik welche den Grundrisse (Karte) der Umgebung, sowie die vorgegebene Fahrstrecke sowie die tatsächlich gefahrene Strecke enthält. Zusätzlich werden noch die Bereiche eingezeichnet welche mit dem aktiven Arbeitsgerät des Serviceroboters überstrichen wurden. Für den Endanwender ist aus der Grafik einfach ersichtlich ob und wie der Plan ausgeführt wurde und wo evtl. noch nachgearbeitet werden muss. Der Bericht enthält Kennzahlen bzw. eine textuelle Beschreibungen des Programms wie z.B. Start - oder Endzeit des Programms, Größe der bearbeiteten Fläche, der Name des gestarteten Programms.

Die Protokollierung erfolgt bei jeder Ausführung einer Aufgabe durch den Serviceroboter. Dies beinhaltet den autonomen Betrieb sowie falls der Serviceroboter auch manuell bedient werden kann den manuellen Betrieb. Gerade die Dokumentation der ausgeführten Aufgabe im manuellen Modus stellt eine Verbesserung zum Stand der Technik dar, da eine Dokumentation der Erbrachten Leistung bei klassischen Maschinen (z.B. Nachlauf Reinigungsmaschinen) durch die nicht vorhandene Positionskenntnis nicht möglich ist. Um im manuellen Modus die Gefahrene Strecke in der Dokumentation einzeichnen zu können muss der Roboter seine Position in der Umgebung kennen. Seine Position bestimmt der Roboter in diesem Modus durch eine globale Lokalisierung in der Umgebung welche durch den Abgleich der aktuellen Sensorinformationen und des bekannten Umgebungsmodell erfolgt. Dies ist erforderlich da der manuelle Modus durch den Benutzer an jeder Stelle in der eingelernten Umgebung gestartet werden kann und die Startposition dem Roboter somit nicht bekannt ist.

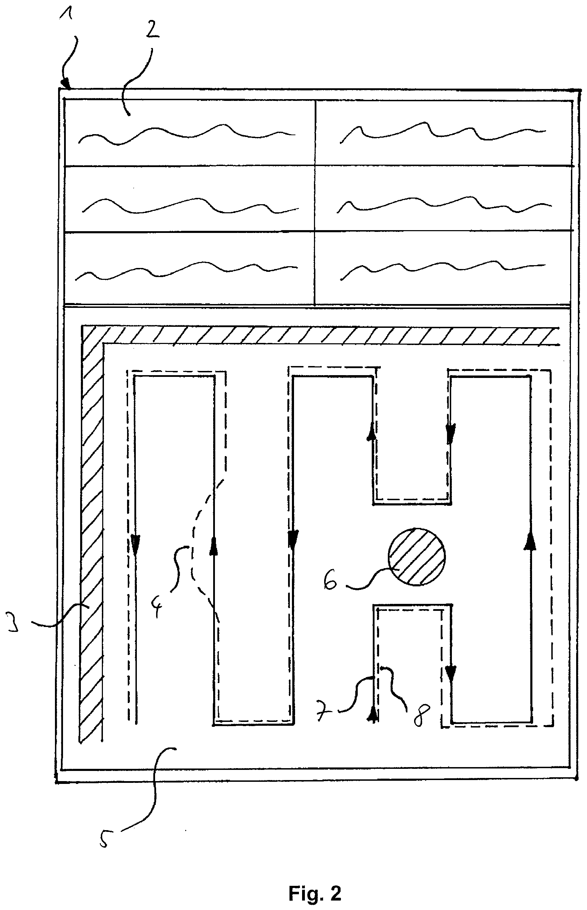

Fig. 2 zeigt einen Reinigungsreport mit Soll-Ist-Vergleich. Der Report besteht aus einer textuellen Beschreibung und einem Grafikbereich in welchem der Grundriss (Karte) der Umgebung, der vorgegebene Pfad sowie der tatsächlich vom Roboter gefahrene Pfad eingezeichnet ist.

### Bezugszeichenliste

- 1: Bericht / Report
- 2: Textuelle Beschreibung
- 3: Gebäudegrundriss
- 4: Planabweichung
- 5: Grafikbereich
- 6: Gebäudegrundriss
- 7: Vom Benutzer vorgegebener Pfad
- 8: Tatsächlicher Pfad

## Patentansprüche

1. Eine Verfahrenskette bestehend aus mindestens vier logischen Teilen
- Einmalige Inbetriebnahme des Roboter in einer neuen Umgebung;
- grafische Programmierung des Roboter;
- Deployment;
- Ausführung des Reinigungsprogramms.

2. Eingelernte Umgebungen sowie Programme können von einem Roboter auf einen andern übertragen werden und eine ggf. aufwändige Inbetriebnahme sowie Programmierung entfällt.

3. Automatisierte Dokumentation der durchgeführten Arbeit durch eine Dokumentationseinheit auf dem Serviceroboter.

4. Dokumentation der Ausgeführten Arbeiten im autonomen sowie im manuellen Betrieb.

5. Dokumentation von Planabweichungen durch Vergleich des programmierten Arbeitspfad und des tatsächlich ausgeführten Pfad.

6. Speicherung der Dokumentation in Cloud-Dienste oder versenden per Push-Nachricht direkt an eine App auf ein mobiles Endgerät oder per Mail.
